# EUROPEAN PATENT APPLICATION

(11) **EP 4 632 595 A1**
(43) Date of publication of application: **15.10.2025**
(21) Application number: 24212044.2
(22) Date of filing: 11.11.2024
(51) Int. Cl.: G06F 16/242

(54) **ELECTRONIC DEVICE AND COMPUTER-IMPLEMENTED METHOD OF GENERATING STRUCTURED QUERY LANGUAGE CODE, COMPUTER PROGRAM AND COMPUTER-READABLE DATA CARRIER**

(30) Priority: 12.04.2024 TW 113113659
(71) Applicant: Tatung University, Taipei 104 (TW)
(72) Inventor: Cheng, Fu-Chiung, 106016 Taipei City (TW); Wang, Dai-Xin, 103022 Taipei City (TW); Liu, Wei-Cheng, 231006 New Taipei City (TW)
(74) Representative: Ter Meer Steinmeister & Partner

(57) **Abstract**

An electronic device (100) and a method of generating a structured query language (SQL) code are provided. A processor (110) of the electronic device (100) is configured to: provide a plurality of first level objects through a graphic user interface (200), and receive a first user command through a transceiver (130) to select a first object from the plurality of first level objects; in response to selecting the first object, provide a plurality of second level objects corresponding to the first object through the graphic user interface (200); receive a second user command through the transceiver (130) to select a second object from the plurality of second level objects; and generate the SQL code (390) according to the first object and the second object, and output the SQL code (390) through the transceiver (130), in which the SQL code (390) includes a first source code corresponding to the first object and a second source code corresponding to the second object.

## Description

### BACKGROUND

### Technical Field

The disclosure relates to a coding technology, and particularly relates to an electronic device and a computer-implemented method of generating a structured query language code as well as a computer program, and a computer-readable data carrier (storage).

### Description of Related Art

In order to manage a database system, managers must have structured query language (hereinafter short SQL) coding capabilities. When a database stores a large amount of data, managers need to spend considerable time and energy coding SQL commands to handle complex query requests. In addition, different database systems may correspond to different SQL syntax or rules, and there are compatibility issues between different database systems.

Currently, there is no way to effectively check the syntax correctness of the SQL commands generated by managers. When the database system is managed by multiple people, it is important to keep the SQL commands readable and maintainable.

Based on the above factors, how to provide a simple and convenient SQL code generation method is one of the important topics in this field.

### SUMMARY

The present disclosure solves the above address problems with the features of the independent claims. Advantageous embodiments can be derived from respective dependent claims.

The present disclosure provides an electronic device and method of generating an SQL code, which can generate the SQL code according to a user command as well as a computer program, and a computer-readable data carrier (storage).

The disclosure provides an electronic device configured to generate an SQL code, including a transceiver and a processor. The processor is coupled to the transceiver, in which the processor is configured to: provide a plurality of first level objects through a graphic user interface, and receive a first user command through the transceiver to select a first object from the plurality of first level objects; in response to selecting the first object, provide a plurality of second level objects corresponding to the first object through the graphic user interface; receive a second user command through the transceiver to select a second object from the plurality of second level objects; and generate the SQL code according to the first object and the second object, and output the SQL code through the transceiver, in which the SQL code includes a first source code corresponding to the first object and a second source code corresponding to the second object.

In an embodiment of the disclosure, the processor is further configured to: provide a first drop-down menu through the graphic user interface, in which the first drop-down menu includes a plurality of first level options respectively corresponding to the plurality of first level objects.

In an embodiment of the disclosure, the processor is further configured to: in response to a first option corresponding to the first object of the plurality of first level options being selected, provide a second drop-down menu through the graphic user interface, in which the second drop-down menu includes a plurality of second level options respectively corresponding to the plurality of second level objects.

In an embodiment of the disclosure, the electronic device further includes a storage medium. The storage medium is coupled to the processor and configured to store a lookup table, in which the lookup table includes a mapping relationship between the first object and the first source code. The processor is further configured to: in response to the first option being selected, query the lookup table to obtain the first source code corresponding to the first object.

In an embodiment of the disclosure, the processor is further configured to: provide a plurality of first level blocks respectively corresponding to the plurality of first level objects and a plurality of second level blocks respectively corresponding to the plurality of second level objects through the graphic user interface.

In an embodiment of the disclosure, the processor is further configured to: provide an operating area through the graphic user interface; drag a first block of the plurality of first level blocks to the operating area according to the first user command, in which the first block corresponds to the first object; drag a second block of the plurality of second level blocks to the operating area according to the second user command to combine with the first block and generate a combined block, in which the second block corresponds to the second object; and generate the SQL code according to the combined block.

In an embodiment of the disclosure, the electronic device further includes a storage medium. The storage medium is coupled to the processor and configured to store a lookup table, in which the lookup table includes a mapping relationship between the first object and the first source code. The processor is further configured to: in response to the first block being dragged to the operating area, query the lookup table to obtain the first source code corresponding to the first object.

In an embodiment of the disclosure, the processor is further configured to: access a data source according to the SQL code through the transceiver to obtain data; and generate a key-value pair according to the data.

In an embodiment of the disclosure, the processor is further configured to: provide a plurality of application appearances through the graphic user interface for selection; in response to a first application appearance of the plurality of application appearances being selected, display a graphic template of the first application appearance, in which the graphic template includes an editable object; specify the key-value pair for the editable object to update the graphic template; and generate an application according to the updated graphic template.

In an embodiment of the disclosure, the plurality of first level objects correspond to a clause of an SQL.

A computer-implemented method of generating an SQL code of the present disclosure includes the following steps. A plurality of first level objects are provided through a graphic user interface, and a first user command is received to select a first object from the plurality of first level objects. In response to selecting the first object, a plurality of second level objects corresponding to the first object are provided through the graphic user interface. A second user command is received to select a second object from the plurality of second level objects. The SQL code is generated according to the first object and the second object, and the SQL code is outputted, in which the SQL code includes a first source code corresponding to the first object and a second source code corresponding to the second object.

In an aspect of the present disclosure there is further provided a computer program comprising program code means for carrying out the above-described method, when the program is executed on an electronic device.

In an aspect of the present disclosure there is further provided a computer-readable data carrier (storage) that comprises program code executable by an electronic device, e.g. a processor thereof, so that the electronic device executes the above-described method. Data carrier may include any internal or external storage means, such as USB-storage, flash memory, or any other suitable form to store computer-readable data.

Based on the above, the disclosure provides users with a simple and convenient SQL code generation method. Users do not need to manually write complex SQL codes. The disclosure can lower the coding ability threshold of database system managers, allowing users to correctly and efficiently manage the database system through the SQL codes.

### BRIEF DESCRIPTION OF THE DRAWINGS

FIG. 1 is a schematic diagram of an electronic device configured to generate an SQL code according to an embodiment of the disclosure.
FIG. 2 is a flowchart of generating an SQL code according to an embodiment of the disclosure.
FIG. 3A and FIG. 3B are schematic diagrams of a graphic user interface providing drop-down menus according to an embodiment of the disclosure.
FIG. 4 is a schematic diagram of a graphic user interface providing graphic blocks according to an embodiment of the disclosure.
FIG. 5 is a flowchart of generating an application according to an embodiment of the disclosure.
FIG. 6A and FIG. 6B are schematic diagrams of a graphic template of an application appearance according to an embodiment of the disclosure.
FIG. 7 is a flowchart of a method of generating an SQL code according to an embodiment of the disclosure.

### DESCRIPTION OF THE EMBODIMENTS

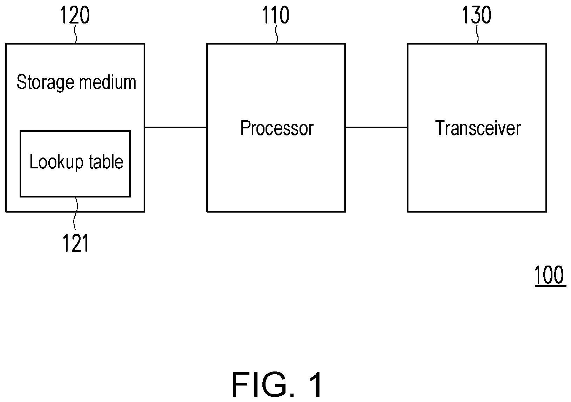

FIG. 1 is a schematic diagram of an electronic device 100 configured to generate an SQL code according to an embodiment of the disclosure. The electronic device 100 may include a processor 110, a storage medium 120, and a transceiver 130. The storage medium 120 may be a data carrier as introduced above.

The processor 110 is, for example, a central processing unit (CPU) or other programmable general-purpose or special-purpose micro control units (MCU), a microprocessor, a digital signal processor (DSP), a programmable controller, an application specific integrated circuit (ASIC), a graphics processing unit (GPU), an image signal processor (ISP), an image processing unit (IPU), an arithmetic logic unit (ALU), a complex programmable logic device (CPLD), a field programmable gate array (FPGA), or other similar elements, or a combination thereof. The processor 110 can be coupled to the storage medium 120 and the transceiver 130, and access and execute a plurality of modules and various applications stored in the storage medium 120.

The storage medium 120 is, for example, any form of fixed or movable random access memory (RAM), a read-only memory (ROM), a flash memory, a hard disk drive (HDD), a solid state drive (SSD), or a similar element, or a combination thereof, configured to store a plurality of modules or various applications that can be executed by the processor 110. In an embodiment, the storage medium 120 may store a lookup table 121. The lookup table 121 can store a mapping relationship between an object (such as a drop-down menu option or a graphic block) and a source code.

The transceiver 130 transmits or receives signals in a wireless or wired manner. The transceiver 130 may also perform, for example, low noise amplification, impedance matching, mixing, up or down frequency conversion, filtering, amplification, and similar operations. The processor 110 can communicate with an external electronic device (such as a terminal device, a database system, or a cloud server) through the transceiver 130. For example, the user can operate a terminal device connected to the transceiver 130 to input a user command to the electronic device 100.

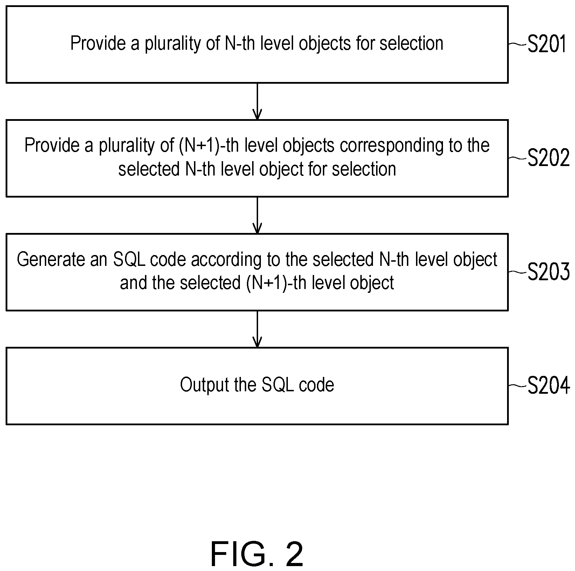

FIG. 2 is a flowchart of generating an SQL code according to an embodiment of the disclosure. The process of FIG. 2 can be implemented by the electronic device 100 shown in FIG. 1.

In step S201, the processor 110 may output a graphic user interface through the transceiver 130, and provide a plurality of N-th level objects (N is a positive integer) for the user to select through the graphic user interface. The object corresponds to the source code of a specific SQL clause (for example: the source code of the WHERE clause), and the object may be editable. The processor 110 may receive the user command through the transceiver 130 and select the selected N-th level object from the plurality of N-th level objects according to the user command. After obtaining the selected N-th level object, the processor 110 may query the lookup table 121 to obtain the source code corresponding to the selected N-th level object.

In an embodiment, the processor 110 may provide drop-down menus for the user to select through the graphic user interface. The drop-down menus may include a plurality of N-th level options respectively corresponding to the plurality of N-th level objects. The user can select the selected N-th level object from the plurality of N-th level options through the user command.

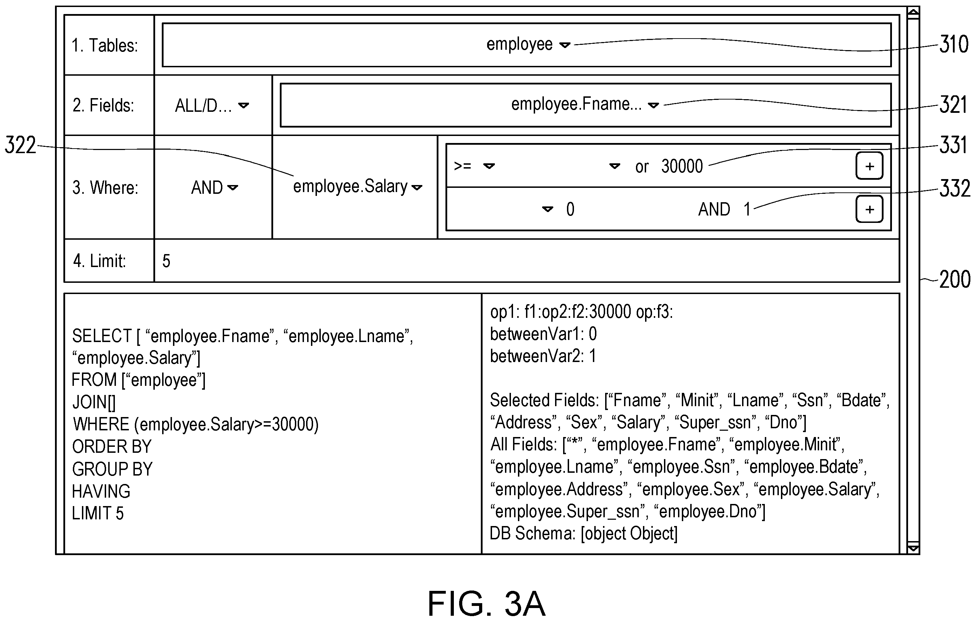

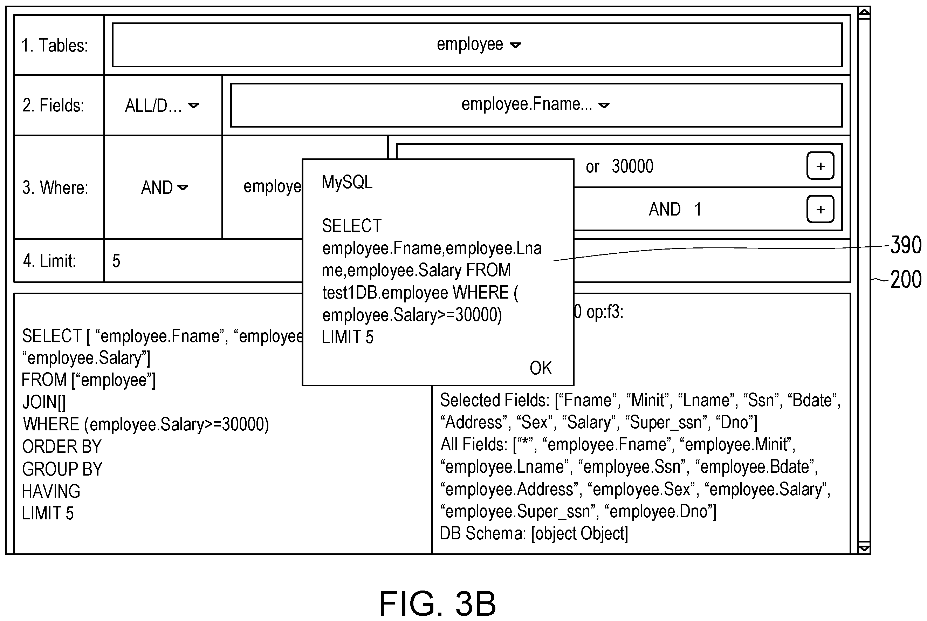

FIG. 3A and FIG. 3B are schematic diagrams of a graphic user interface 200 providing drop-down menus according to an embodiment of the disclosure. Taking FIG. 3A as an example, the processor 110 can provide a drop-down menu 310 for the user to select through the graphic user interface 200. The drop-down menu 310 can include a plurality of first level options respectively corresponding to a plurality of first level objects. For example, the user can select "employee (table)" as the selected first level object from the drop-down menu 310 through the user command. After obtaining the selected first level object "employee", the processor 110 can query the lookup table 121 to obtain the source code for selecting "employee".

In an embodiment, the processor 110 may provide a plurality of graphic blocks corresponding to a plurality of source codes for the user to select through the graphic user interface 200. Specifically, the graphic user interface 200 can provide a plurality of N-th level blocks respectively corresponding to the plurality of N-th level objects and a plurality of (N+1)-th level blocks respectively corresponding to a plurality of (N+1)-th level objects for the user to select. The graphic user interface 200 may provide an operating area. The user can drag a specific block of the plurality of N-th level blocks to the operating area through the user command, in which the specific block corresponds to the selected N-th level object. After dragging the specific block to the operating area, the processor 110 can query the lookup table 121 to obtain the source code corresponding to the selected N-th level object (or the specific block).

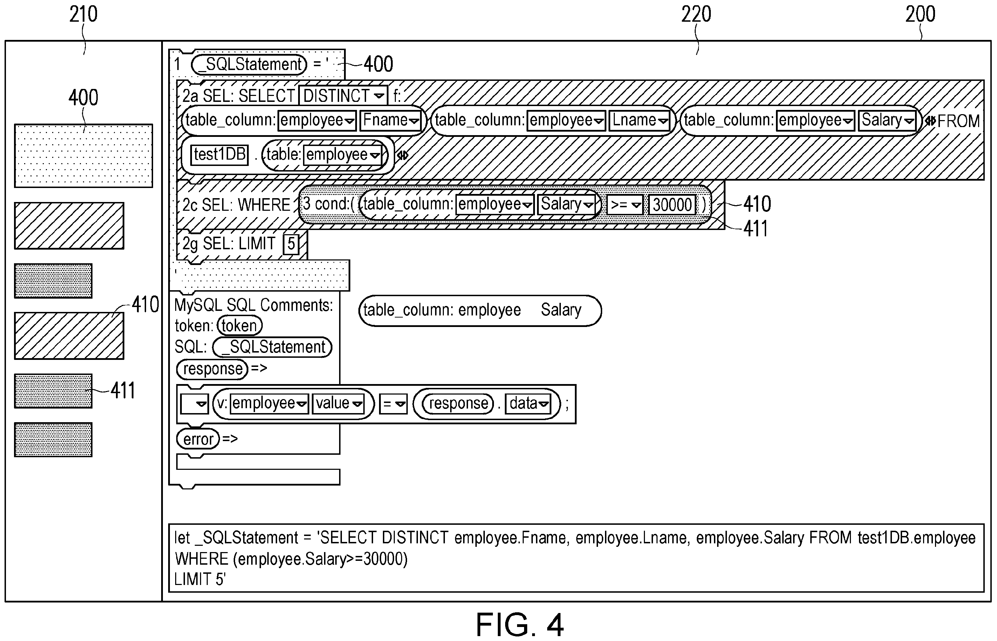

FIG. 4 is a schematic diagram of the graphic user interface 200 providing graphic blocks according to an embodiment of the disclosure. Taking FIG. 4 as an example, the graphic user interface 200 can provide a graphic block list 210 and an operating area 220. The graphic block list 210 can include a plurality of graphic blocks of different levels. For example, a first level block 400 may have one or more second level blocks corresponding to second level objects, such as a second level block 410. The second level block 410 may have one or more third level blocks corresponding to third level objects, such as a third level block 411. The graphic user interface 200 can provide the plurality of graphic blocks including the first level block 400, the second level block 410, or the third level block 411 for the user to select through the graphic block list 210. The user can drag the first level block 400 from the graphic block list 210 to the operating area 220 through the user command. When the first level block 400 is dragged from the graphic block list 210 to the operating area 220, the appearance of the first level block 400 may change or not change. After the first level block 400 is dragged from the graphic block list 210 to the operating area 220, the processor 110 may query the lookup table 121 to obtain the source code corresponding to the first level block 400.

Returning to FIG. 2, in step S202, the processor 110 may provide the plurality of (N+1)-th level objects corresponding to the selected N-th level object for the user to select through the graphic user interface 200. The processor 110 may receive the user command through the transceiver 130 and select the selected (N+1)-th level object from the plurality of (N+1)-th level objects according to the user command. After obtaining the selected (N+1)-th level object, the processor 110 may query the lookup table 121 to obtain the source code corresponding to the selected (N+1)-th level object.

Taking FIG. 3A as an example, after obtaining the selected first level object "employee", the graphic user interface 200 can provide a drop-down menu 321 (or a drop-down menu 322) corresponding to the selected first level object "employee" for the user to select. The drop-down menu 321 (or the drop-down menu 322) may include a plurality of second level options respectively corresponding to the second level objects. For example, the user can select "employee.Fname" as the selected second level object from the drop-down menu 321 through the user command. Or, the user can select "employee. Salary" from the drop-down menu 322 as the selected second level obj ect through the user command. Based on a similar method, after obtaining the selected second level object "employee.Salary", the graphic user interface 200 may provide a drop-down menu 331 (or drop-down menu 332) corresponding to the selected second level object "employee. Salary" for the user to select. The above options of the drop-down menus may be editable. For example, the options of the drop-down menu 331 may include editable blank fields. The user can input the value "30000" into the blank fields in the options of the drop-down menu 331 through the user command.

Taking FIG. 4 as an example, after dragging the first level block 400 to the operating area 220, the user can drag the second level block 410 belonging to the first level block 400 from the graphic block list 210 to the operating area 220 through the user command, so that the first level block 400 and the second level block 410 are combined in the operating area 220 to generate a combined block. Based on a similar method, after dragging the second level block 410 to the operating area 220, the user can drag the third level block 411 belonging to the second level block 410 from the graphic block list 210 to the operating area 220 through the user command, so that the first level block 400, the second level block 410, and the third level block 411 are combined in the operating area 220 to generate a combined block. Each of the above graphic blocks can be editable. For example, the third level block 411 may include editable blank fields. The user can input the value "30000" into the blank fields of the third level block 411 through the user command.

Returning to FIG. 2, in step S203, the processor 110 may generate the SQL code according to the selected N-th level object and the selected (N+1)-th level object. The SQL code may include the source code corresponding to the selected N-th level object and the source code corresponding to the selected (N+1)-th level object. In step S204, the processor 110 may output the SQL code through the transceiver 130. The SQL code output by the processor 110 may include, but is not limited to, the following SQL command: select a command, insert a command, update a command, or delete a command.

Taking FIG. 3A and FIG. 3B as an example, after selecting the options provided by the drop-down menus 310, 321, 322, 331, or 332, the processor 110 can generate an SQL code 390 according to the source code corresponding to each selected option, as shown in FIG. 3B.

Taking FIG. 4 as an example, after generating the combined block including the first level block 400, the second level block 410, and the third level block 411, the processor 110 can generate the SQL code according to the combined block.

It is worth noting that different database systems may have different SQL syntax rules or features. Therefore, each step in the process of FIG. 2 can be adaptively adjusted based on the SQL syntax supported by the database system, so that the SQL code generated by the electronic device 100 is suitable for the currently accessed database.

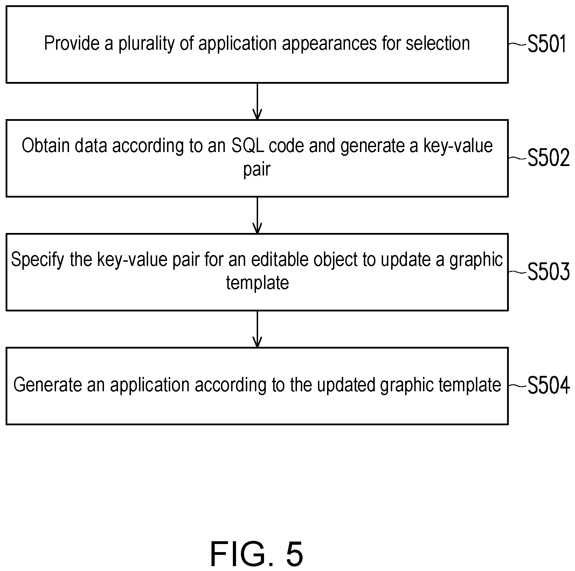

FIG. 5 is a flowchart of generating an application according to an embodiment of the disclosure. The process of FIG. 5 can be implemented by the electronic device 100 shown in FIG. 1.

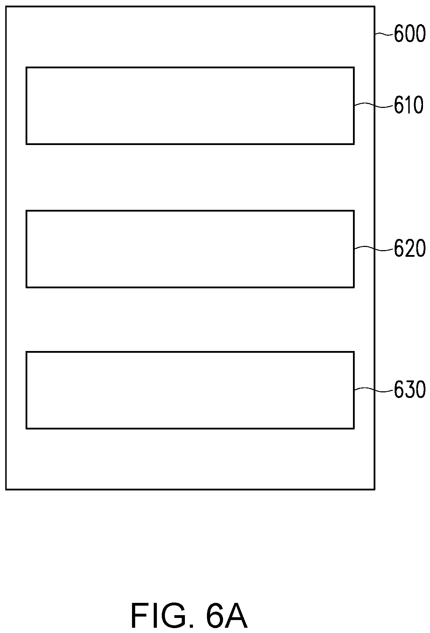

In step S501, the processor 110 may provide a plurality of application appearances for the user to select through the graphic user interface 200. The graphic user interface 200 may display a graphic template of the selected application appearance for user reference. For example, the graphic user interface 200 may display a graphic template 600 as shown in FIG. 6A for user reference. The graphic template 600 may include one or more editable objects, such as an editable object 610, an editable object 620, or an editable object 630.

In step S502, the processor 110 can access a data source (for example, an external database system) according to the generated SQL code, and then obtain the data. Then, the processor 110 may generate one or more key-value pairs according to the data. It should be noted that step S502 may be executed before step S501, and the disclosure is not limited thereto.

In step S503, the processor 110 may specify the key-value pair for the editable object of the graphic template 600 according to the user command to update the graphic template 600. Taking

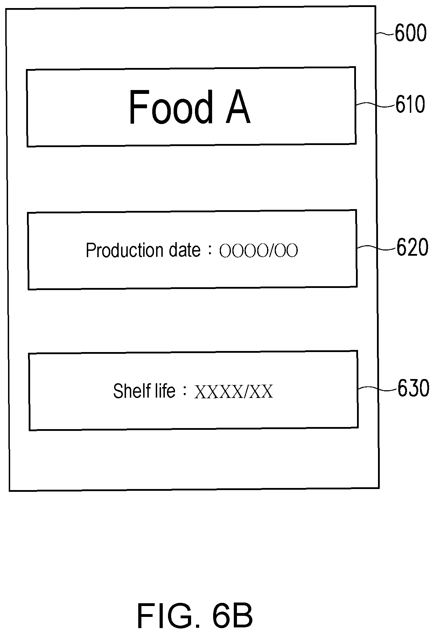

FIG. 6B as an example, the processor 110 can specify the key-value pair corresponding to the text data "Food A" for the editable object 610, the key-value pair corresponding to the text data "Production date: OOOO/OO" for the editable object 620, and the key-value pair corresponding to the text data "Shelf life: XXXX/XX" for the editable object 630, thereby updating the graphic template 600.

In step S504, the processor 110 may generate an application according to the updated graphic template 600. The application appearance generated by the processor 110 may include information associated with the key-value pair obtained in step S502. The processor 110 may output the generated application through the transceiver 130. For example, the processor 110 can upload the application to the cloud server through the transceiver 130.

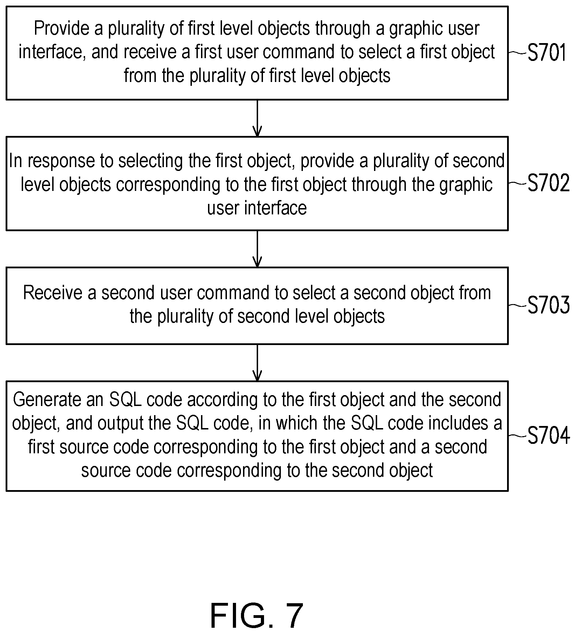

FIG. 7 is a flowchart of a method of generating an SQL code according to an embodiment of the disclosure. The method can be implemented by the electronic device 100 shown in FIG. 1. In step S701, the plurality of first level objects are provided through the graphic user interface, and a first user command is received to select a first object from the plurality of first level objects. In step S702, in response to selecting the first object, the plurality of second level objects corresponding to the first object are provided through the graphic user interface. In step S703, a second user command is received to select a second object from the plurality of second level objects. In step S704, the SQL code is generated according to the first object and the second object, and the SQL code is output, in which the SQL code includes a first source code corresponding to the first object and a second source code corresponding to the second object.

In summary, the electronic device of the disclosure can provide the drop-down menus or the graphic blocks corresponding to a specific source code for the user to select. Users can combine different levels of source code to generate the SQL code by selecting options from the drop-down menus or dragging the graphic blocks. The disclosure provides users with a simple and convenient SQL code generation method. Users do not need to manually write complex SQL codes. The disclosure can lower the coding ability threshold of database system managers, allowing users to correctly and efficiently manage the database system through the SQL codes.

## Claims

1. An electronic device (100) configured to generate a structured query language, SQL, code, comprising:
a transceiver (130); and
a processor (110), coupled to the transceiver (130), wherein the processor (110) is configured to:
provide a plurality of first level objects through a graphic user interface (200), and receive a first user command through the transceiver (130) to select a first object from the plurality of first level objects;
in response to selecting the first object, provide a plurality of second level objects corresponding to the first object through the graphic user interface (200);
receive a second user command through the transceiver (130) to select a second object from the plurality of second level objects; and
generate the SQL code (390) according to the first object and the second object, and output the SQL code (390) through the transceiver (130), wherein the SQL code (390) comprises a first source code corresponding to the first object and a second source code corresponding to the second object.

2. The electronic device (100) according to claim 1, wherein the processor (110) is further configured to:
provide a first drop-down menu (310, 321, 322, 331, 332) through the graphic user interface (200), wherein the first drop-down menu (310, 321, 322, 331, 332) comprises a plurality of first level options respectively corresponding to the plurality of first level objects.

3. The electronic device (100) according to claim 2, wherein the processor (110) is further configured to:
in response to a first option of the plurality of first level options corresponding to the first object being selected, provide a second drop-down menu (310, 321, 322, 331, 332) through the graphic user interface (200), wherein the second drop-down menu (310, 321, 322, 331, 332) comprises a plurality of second level options respectively corresponding to the plurality of second level objects.

4. The electronic device (100) according to claim 3, further comprising:
a storage medium (120), coupled to the processor (110), and configured to store a lookup table (121), wherein the lookup table (121) comprises a mapping relationship between the first object and the first source code, and the processor (110) is further configured to:
in response to the first option being selected, query the lookup table (121) to obtain the first source code corresponding to the first object.

5. The electronic device (100) according to any of the preceding claims, wherein the processor (110) is further configured to:
provide a plurality of first level blocks (400) respectively corresponding to the plurality of first level objects and a plurality of second level blocks (410) respectively corresponding to the plurality of second level objects through the graphic user interface (200).

6. The electronic device (100) according to claim 5, wherein the processor (110) is further configured to:
provide an operating area (220) through the graphic user interface (200);
drag a first block of the plurality of first level blocks (400) to the operating area (220) according to the first user command, wherein the first block corresponds to the first object;
drag a second block of the plurality of second level blocks (410) to the operating area (220) according to the second user command to combine with the first block and generate a combined block, wherein the second block corresponds to the second object; and
generate the SQL code (390) based on the combined block.

7. The electronic device (100) according to claim 6, further comprising:
a storage medium (120), coupled to the processor (110), and configured to store a lookup table (121), wherein the lookup table (121) comprises a mapping relationship between the first object and the first source code, and the processor (110) is further configured to:
in response to the first block being dragged to the operating area (220), query the lookup table (121) to obtain the first source code corresponding to the first object.

8. The electronic device (100) according to any of the preceding claims, wherein the processor (110) is further configured to:
access a data source according to the SQL code (390) through the transceiver (130) to obtain data; and
generate a key-value pair according to the data.

9. The electronic device (100) according to claim 8, wherein the processor (110) is further configured to:
provide a plurality of application appearances for selection through the graphic user interface (200);
in response to a first application appearance of the plurality of application appearances being selected, display a graphic template (600) of the first application appearance, wherein the graphic template (600) comprises an editable object (610, 620, 630);
specify the key-value pair for the editable object (610, 620, 630) to update the graphic template (600); and
generate an application according to the updated graphic template (600).

10. The electronic device (100) according to any of the preceding claims, wherein the plurality of first level objects correspond to a clause of an SQL.

11. A computer-implemented method of generating an SQL code (390), comprising:
providing a plurality of first level objects through a graphic user interface (200), and receiving a first user command to select a first object from the plurality of first level objects;
in response to selecting the first object, providing a plurality of second level objects corresponding to the first object through the graphic user interface (200);
receiving a second user command to select a second object from the plurality of second level objects; and
generating the SQL code (390) based on the first object and the second object, and outputting the SQL code (390), wherein the SQL code (390) comprises a first source code corresponding to the first object and a second source code corresponding to the second object.

12. A computer program comprising program code means for carrying out the method according to claim 11, when the program is executed on an electronic device.

13. A computer-readable data carrier comprising program code executable by an electronic device so that the electronic device executes a method according to claim 11.

## Amended claims

### Amended claims in accordance with Rule 137(2) EPC.

1. An electronic device (100) configured to generate a structured query language, SQL, code, comprising:
a transceiver (130); and
a processor (110), coupled to the transceiver (130), wherein the processor (110) is configured to:
provide a plurality of first level objects through a graphic user interface (200), and receive a first user command through the transceiver (130) to select a first object from the plurality of first level objects;
in response to selecting the first object, provide a plurality of second level objects corresponding to the first object through the graphic user interface (200);
receive a second user command through the transceiver (130) to select a second object from the plurality of second level objects; and
generate the SQL code (390) according to the first object and the second object, and output the SQL code (390) through the transceiver (130), wherein the SQL code (390) comprises a first source code corresponding to the first object and a second source code corresponding to the second object;
**characterized in that** the processor (110) is further configured to:
provide a graphic block list (210) and an operating area (220) through the graphic user interface (200);
provide a plurality of graphic blocks of different levels in the graphic block list (210), including a plurality of first level blocks (400) respectively corresponding to the plurality of first level objects and a plurality of second level blocks (410) respectively corresponding to the plurality of second level objects; wherein a first block of the plurality of first level blocks (400) has one or more second blocks of the plurality of second level blocks (410);
drag a first block of the plurality of first level blocks (400) to the operating area (220) according to the first user command, wherein the first block corresponds to the first object;
drag a second block of the plurality of second level blocks (410) to the operating area (220) according to the second user command to combine with the first block and generate a combined block, wherein the second block corresponds to the second object; and
generate the SQL code (390) based on the combined block.

2. The electronic device (100) according to claim 1, wherein the processor (110) is further configured to:
provide a first drop-down menu (310, 321, 322, 331, 332) through the graphic user interface (200), wherein the first drop-down menu (310, 321, 322, 331, 332) comprises a plurality of first level options respectively corresponding to the plurality of first level objects.

3. The electronic device (100) according to claim 2, wherein the processor (110) is further configured to:
in response to a first option of the plurality of first level options corresponding to the first object being selected, provide a second drop-down menu (310, 321, 322, 331, 332) through the graphic user interface (200), wherein the second drop-down menu (310, 321, 322, 331, 332) comprises a plurality of second level options respectively corresponding to the plurality of second level objects.

4. The electronic device (100) according to claim 3, further comprising:
a storage medium (120), coupled to the processor (110), and configured to store a lookup table (121), wherein the lookup table (121) comprises a mapping relationship between the first object and the first source code, and the processor (110) is further configured to:
in response to the first option being selected, query the lookup table (121) to obtain the first source code corresponding to the first object.

5. The electronic device (100) according to claim 1, further comprising:
a storage medium (120), coupled to the processor (110), and configured to store a lookup table (121), wherein the lookup table (121) comprises a mapping relationship between the first object and the first source code, and the processor (110) is further configured to:
in response to the first block being dragged to the operating area (220), query the lookup table (121) to obtain the first source code corresponding to the first object.

6. The electronic device (100) according to any of the preceding claims, wherein the processor (110) is further configured to:
access a data source according to the SQL code (390) through the transceiver (130) to obtain data; and
generate a key-value pair according to the data.

7. The electronic device (100) according to claim 6, wherein the processor (110) is further configured to:
provide a plurality of application appearances for selection through the graphic user interface (200);
in response to a first application appearance of the plurality of application appearances being selected, display a graphic template (600) of the first application appearance, wherein the graphic template (600) comprises an editable object (610, 620, 630);
specify the key-value pair for the editable object (610, 620, 630) to update the graphic template (600); and
generate an application according to the updated graphic template (600).

8. The electronic device (100) according to any of the preceding claims, wherein the plurality of first level objects correspond to a clause of an SQL.

9. A computer-implemented method of generating an SQL code (390), comprising:
providing a plurality of first level objects through a graphic user interface (200), and receiving a first user command to select a first object from the plurality of first level objects;
in response to selecting the first object, providing a plurality of second level objects corresponding to the first object through the graphic user interface (200);
receiving a second user command to select a second object from the plurality of second level objects; and
generating the SQL code (390) based on the first object and the second object, and outputting the SQL code (390), wherein the SQL code (390) comprises a first source code corresponding to the first object and a second source code corresponding to the second object;
**characterized by**:
providing a graphic block list (210) and an operating area (220) through the graphic user interface (200);
providing a plurality of graphic blocks of different levels in the graphic block list (210), including a plurality of first level blocks (400) respectively corresponding to the plurality of first level objects and a plurality of second level blocks (410) respectively corresponding to the plurality of second level objects; wherein a first block of the plurality of first level blocks (400) has one or more second blocks of the plurality of second level blocks (410);
dragging a first block of the plurality of first level blocks (400) to the operating area (220) according to the first user command, wherein the first block corresponds to the first object;
dragging a second block of the plurality of second level blocks (410) to the operating area (220) according to the second user command to combine with the first block and generate a combined block, wherein the second block corresponds to the second object; and
generating the SQL code (390) based on the combined block.

10. A computer program comprising program code means for carrying out the method according to claim 9, when the program is executed on an electronic device.

11. A computer-readable data carrier comprising program code executable by an electronic device so that the electronic device executes a method according to claim 9.
